Europäisches Patentamt

European Patent Office

Office européen des brevets

(11) Publication number: **0 303 361**
**A2**

# EUROPEAN PATENT APPLICATION

(21) Application number: **88306492.5**

(51) Int. Cl.⁴: **G06F 15/72**

(22) Date of filing: **15.07.88**

(30) Priority: **24.07.87 US 77160**

(43) Date of publication of application:
**15.02.89 Bulletin 89/07**

(84) Designated Contracting States:
**BE DE FR GB IT NL**

(71) Applicant: **AMERICAN TELEPHONE AND TELEGRAPH COMPANY**
**550 Madison Avenue**
**New York, NY 10022(US)**

(72) Inventor: **Howard, Marc Warren**
**139 South Beverly Drive**
**Bricktown New Jersey 08724(US)**
Inventor: **McMillan Jr., Leonard**
**229 River Road**
**Red Bank New Jersey 07701(US)**
Inventor: **Potmesil, Michael**
**208 Heritage Square**
**Aberdeen New Jersey 07747(US)**

(74) Representative: **Buckley, Christopher Simon Thirsk et al**
**AT&T (UK) LTD. AT&T Intellectual Property Division 5 Mornington Road**
**Woodford Green, Essex IG8 OTU(GB)**

(54) **High resolution graphics machine architecture.**

(57) A display and imaging system characterized by an architecture where the tasks that specify what is to be drawn are carried out in a host processor; tasks that that deal with the objects to be drawn and which are processed most efficiently in a non-distributed manner are carried out in a pipeline transformation processor that comprises a pipeline arrangement of processors; and tasks that deal with the display of pixels are carried out in a parallel arrangement of drawing processors. Multiplexing flexibility in the use of the drawing processors provides robustness.

## HIGH RESOLUTION GRAPHICS MACHINE ARCHITECTURE

Background of the Invention

This invention relates to systems for displaying three-dimensional shaded images on a two-dimensional raster display screen.

In providing visual representations of three-dimensional objects on a two-dimensional display means, such as a raster display screen of a cathode ray tube, it is necessary to provide mechanisms for mapping the represented objects onto a two-dimensional space, for eliminating hidden surfaces, and for shading visible surfaces in the image so that a three-dimensional representational effect will result. In some display systems, the mapping of each point on the overall image to be display is created at a first processor, normally referred to as a host processor, but the data representing each such point is not supplied for display on the raster display screen until every point forming the overall image has been created and the data defining the complete image has been formed and stored in the host processor. Only after all of the points to be displayed have been computed is the data supplied to a second processor, normally referred to as a local display processor, which is associated with the screen and which converts the overall point data into video data for providing a line-by-line scan of the image to be represented.

The host processor in such systems performs essentially all of the functions necessary, and that includes the mapping function, rotation of the image, scaling of the image, windowing, hidden surface removal, shading, and scan conversion or "rasterization" of the data.

With respect to hidden surface removal, one known approach has been to use a depth buffer, sometimes referred to as a Z-buffer. The host processor provides storage means where information pertaining to the depth of the points to be displayed is maintained, and that information provides a convenient way for determining whether a point is to be displayed or not. To create shading, the host computes suitable intensity values for each point in the overall image so as to provide a three-dimensional shading effect in the imaged display. A number of shading algorithms are known in the art, such as Gouraud shading and Phong shading.

In other designs, the division of labor between the host processor and the local display processor is arranged differently, with the display processor assuming a heavier burden. An example of such a system is described in U.S. Patent No. 4,475,104 issued October 2, 1984. Therein, the display processor rather than the host processor is used to create image data defining the location, color and intensity of each point of the overall image. The display processor also processes and stores depth data which defines the corresponding depth relationships of the image points at each location of the overall image. Because both image information and depth information are immediately available for use by the local display processor, video image data defining each point of the overall image can be supplied for display as soon as it has been created. Hence, the overall image can be constructed (i.e., displayed) incrementally, giving the user a feel of greater responsiveness and immediacy.

In many respects the system described by the 4,475,104 patent represents merely a shift in the computation burden from the host processor to the local processor. It does not address the fundamental speed-of-processing problem that is encountered when very high resolutions are desired in an environment that permits interactive communication between the user and the display system (such as in rendering applications).

That problem is addressed, in part, by a system described by H. Fuchs in an article titled "Distributing a Visible Surface Algorithm Over Multiple Processors", Proceedings of the ACM, October 1977. He describes a system that includes host computing means and display computing means, but this display computing means has a power of 2 number of processing elements (e.g., 16), and to each of the processing elements there are attached a power of 2 image buffer memories (e.g., 8). In addition, each processing element contains a central processing unit (CPU), local program, and data store. The processing elements receive data from the host simultaneously. The data comprises a collection of polygon specifications that combine to describe the image to be displayed. Upon receiving a polygon's specification, each processing element processes the information pertaining to its display area. When all of the processing elements finish their processing, the next polygon definition is transmitted by the host. Since a polygon will generally occupy a different number of pixels in the buffer memories of the various processing elements memories, the processing completion times of the various processing elements would tend to differ. To reduce this variability to a minimum, the pixels assigned to one processing element are interleaved with pixels assigned to another processing element. A similar interleaving scheme is employed between the pixels stored in one image buffer memory and another image buffer memory connected to the same processing element.

Although the Fuchs architecture spreads the processing burden among a number of processing elements, it is still very demanding on the processing elements' computing power, and this computing power is not utilized very efficiently because some of the necessary algorithms are most efficient when they are carried out in a single processor. Also, the processing elements in the Fuchs architecture are not interconnected and that limits the usefulness of the processing elements for operations where all pixels must be accessible by a given processor.

Summary of the Invention

In accordance with the principles of our invention we separate the tasks involved in rendering an image into three groups: those that specify what is to be drawn; those that deal with the objects to be drawn and which are processed most efficiently in a non-distributed manner; and those that deal with the display of pixels. Paralleling this division, our graphics and image display system comprises a host processor whose task is to define that which is drawn, a pipeline arrangement of processors whose task is to perform computations on objects to be drawn, such as transformations and rotations, and a flexible parallel arrangement of processors with buffer memories that combine to effect a double buffered distributed video memory whose task is to compute the intensities of pixels to be drawn.

Additional advantages are derived from the specific architecture of the processors that deal with the latter two groups, as described below; and in connection therewith

Brief Description of the Drawing

FIG. 1 depicts the general block diagram of our graphics system;

FIG. 2 illustrates the block diagram of transformation pipeline 30;

FIGS. 3 and 4 depict a serial and a parallel connection, respectively, of an enhanced transformation pipeline 30;

FIG. 5 depicts the detailed block diagram of transformation processor 31 employed within transformation pipeline 30;

FIG. 6 depicts an arrangement of processor boards that are multiplexed and combined to form a high-speed input to video controller 50, where each of the boards contains a number of processors belonging to pixel node array 40;

FIG. 7 illustrates the multiplexing pattern between the processors shown in FIG. 6; and

FIG. 8 presents a detailed block diagram of the processors employed within the pixel node array.

Detailed Description

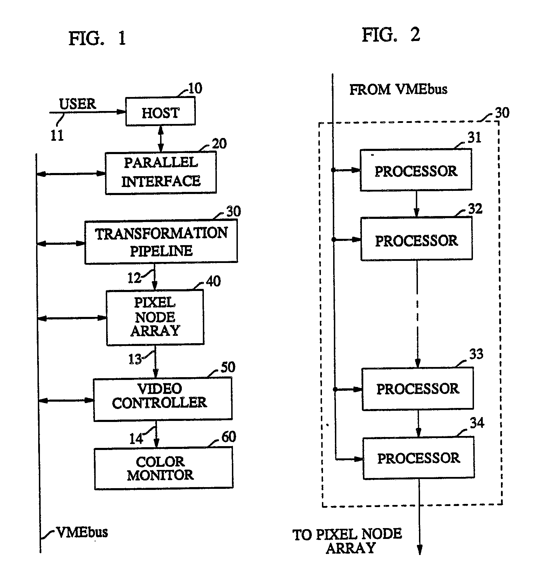

FIG. 1 presents a block-diagram of our graphics machine. It includes a host processor 10 connected through a parallel interface block 20 to a peripheral bus. Host 10 may be a conventional general purpose computer that interacts with users via bus 11, and with parallel interface block 20 via a high speed parallel channel. In the preferred embodiment interface block 20 may be a commercial bus repeater card, such as the VMIVME-REPEATL board offered by VME Microsystems International Corporation, Huntsville, Alabama, USA; and its purpose is to interface the high speed channel of a processor with a parallel communication bus to which peripherals and other processors may be connected. In the preferred embodiment we employ the standard IEEE P1014/D1.2 bus, which is also known as the VMEbus. A specification of this bus is presented in "The VMEbus Specification", edited by Micrology, pbt, Inc., PRINTEX Publishing Co., Inc.

The parallel bus (VMEbus) is connected in FIG. 1 to transformation pipeline 30, to pixel node array 40, and to video controller 50. The connection between the VMEbus (and host 10) and blocks 30, 40 and 50 is bidirectional. Host 10 transmits data and execution commands to the blocks. In response to some of the commands, information flows back to the host.

In addition to the VMEbus that connects blocks 30, 40 and 50, transformation pipeline 30 is connected to pixel node array 40 via bus 12, and pixel node array 40 is connected to video controller 50 via bus 13. Controller 50 is connected to a high quality commercial color monitor 60 via bus 14. The video monitor we currently use is a 1024 line by 1280 pixels per line raster scan monitor manufactured by Hitachi.

The graphics display machine of FIG. 1 attains superior performance by employing the above-described architecture to allocate the computation loads in an efficient manner. Specifically, the required computations are divided into three groups: those that specify what is to be drawn; those that deal with the objects to be drawn and which are processed most efficiently in a non-distributed manner, and those that deal with the display of pixels. Additional advantages are derived from the specific architecture of the processors that deal with the latter two groups, as described below.

## Transformation Pipeline 30

Transformation pipeline 30 is the processor arrangement that performs many of the operations that relate to the objects that are to be drawn on monitor 60. That is, in connection with some of the operations that need to be performed in order to create the desired images, the algorithm must be applied to objects treated as units (e.g., an example of such an operation may be a desired rotation of the object). For those operations where objects form the units of work, it is most efficient to execute the required processing in a non-distributed manner, in the sense that any particular transformation to be applied to an object is performed completely by one program and in one processor. The architecture of transformation pipeline 30 is formulated to assist in the execution of such processor. More specifically, transformation pipeline 30 comprises a plurality of processors that are interconnected to form a processing pipeline. One embodiment, shown in FIG 2, has the output signals of processor 31 being applied to processor 32, and the signals of processor 32 continue downward through the remaining processors in the pipeline, and end with processor 33 signals being applied to processor 34. The VMEbus is connected to all of the processors.

Each one of the processors in the transformation pipeline depicted in FIG. 2 performs a different operation, with the results of one operation in the pipeline comprising at least part of the input for the next operation in the pipeline. The following summarizes some of the transformation pipeline operations,

### • Object Generation

This operation involves the conversion of an object's specification into a representation that is suitable for further processing. In this step, for example, a conversion is made of the specification "draw a sphere with a radius R centered on point $X_1,Y_1,Z_1$" into a set of polygon specifications that approximate the surface of the sphere.

### • 3D Transformations

This operation involves the transformation of an object's specification in the modeling three-dimensional space into a specification of the object in the three dimensional space related to the viewer (or "camera" position and orientation). We call this the eye space.

### • X,Y,Z Clipping

This operation involves deleting those portions of objects which cannot appear on the final output on monitor 60 because the object is outside the field of view in either the X, Y, or Z directions.

### • Backfacing Surface Removal

This operation involves the removal of object surfaces that are behind other surfaces of the same object and are therefore hidden from view.

### • Triangularization

This operation reduces all polygons into triangles in order to simplify further calculations.

### • Shading

This operation involves the calculations of intensity values of the triangle vertices to create a shading effect that is responsive to the viewer's vantage point in relation to the designated light sources and their directions, and an object's surface properties.

### • Projection and Viewport Mapping

This operation involves the mapping from the three dimensional eye space into a two-dimensional space that is cropped or framed to correspond to an area of the monitor's screen.

### • Pixel Node Preprocessing

This operation involves to the computational tasks pertaining to raster scan conversion. This includes, for example, determining the edges of the triangles based on the locations of vertices.

● *Picking Selecting, Feedback*

These operations deal with the interaction between the machine and the users. Picking helps the user to identify a chosen object on the monitor's screen, such as with a mouse controlled cursor. Selecting is the process of selecting an object that is picked, so that a desired operation may be performed on the selected object. Feedback relates to the process of sending the information pertaining to a designated object back to the host.

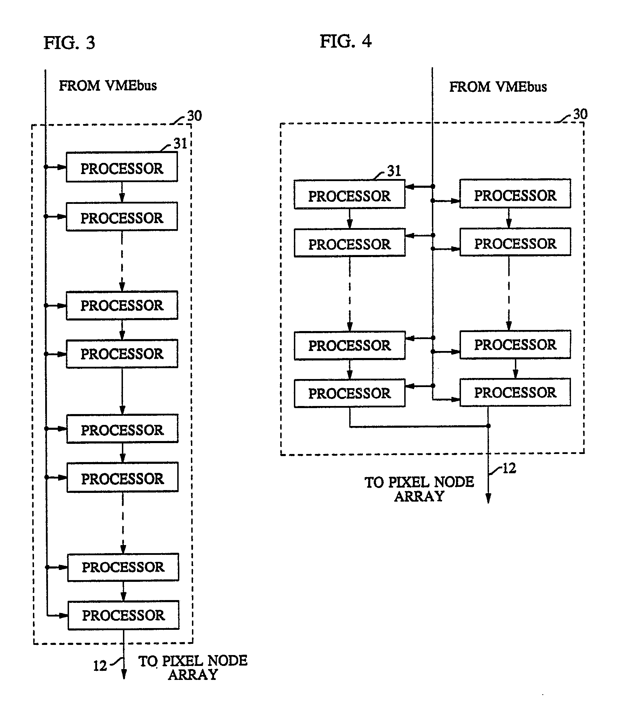

The above-described operations performed by transformation pipeline 30 form a sufficient set but, of course, other operations can be envisioned that would benefit from a pipeline processor treatment. As an aside, all of these operations are well known in the art of graphic imaging. Recognizing the benefits of pipelining, our architecture contemplates not only the use of a plurality of processor stages arranged in a pipeline fashion, but also the use of more than one string of interconnected processors. FIG. 3 depicts an arrangement where two pipeline processor strings are concatenated to form one long pipeline string, while FIG. 4 depicts an arrangement where two pipeline processor strings are operated in parallel.

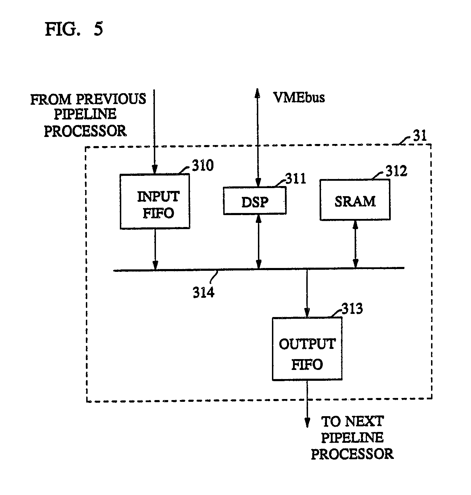

Although each of the processors in the pipeline (e.g., processor 31) performs a different operation, our architecture derives significant cost and flexibility advantages from the use of a common design for the processors. The architecture of processor 31 is depicted in FIG. 5.

The kernel of the FIG. 5 processor is general-purpose, floating-point-arithmetic, digital signal processor (DSP) block 311. DSP 311 can be of any conventional design, but our graphics machine employs a commercial digital signal processor, known as DSP32, that is offered by AT&T. DSP 311 communicates with the VMEbus and with an internal bus 314. Input signals, from host 10 (via the VMEbus - in the case of processor 31) or from a previous processor in the pipeline of transformation pipeline 30, are applied to bus 314 through a FIFO memory 310, which in our design is 512 words "long" and 32 bits per word "wide". As time permits, DSP 314 fetches information from FIFO 310 and operates on it. It is assisted by program and data memory 312, which is connected to bus 314. Memory 312 is, most advantageously, a fast memory and therefore, for our design, we employ an 8K by 32 bit semiconductor static RAM. The results developed by DSP 311 are sent to the next transformation processor in the pipeline via FIFO memory 313, which is also connected to bus 314. Like FIFO 310 memory, FIFO 313 memory is a 512 word by 32 bit memory.

Pixel Node Array 40

Pixel array 40 comprises a plurality of interconnected drawing processors that receive information from transformation pipeline 30 (bus 12) and, in some embodiments, from each other. These processors operate on the received information and deliver the results to video controller 50 via bus 13. The processing performed by drawing processors is typically the kind that concerns itself with the process of rendering, such as shading. All of the processors perform the same operations (i.e., execute the same programs), and together they develop the information that is stored in a buffer from which the data is displayed on monitor 60.

The primary reason why an entire array of drawing processors is employed in one of throughput limitations. More specifically, in order to achieve flicker-free depiction of movement responsive to user iteration (such as moving the "camera" closer to an object), at least 10 frames per second are required. We apply this requirement to provide a near real-time rendering of images that change with time. Rasterization, visible surface determination, and shading calculations require approximately 2000 operations per triangle, and an entire scene may comprise from 2000 to a million triangles. This translates to between $40x10^6$ and $2x10^{10}$ high precision operations per second. As an aside, a triangle is our basic image-describing polygon. Higher order polygon specifications can, of course, be reduced to triangle specifications. In present day technology, such processing capabilities cannot be attained in a single processor. Accordingly, our architecture calls for a parallel arrangement of drawing processors that combine to provide the necessary computing power.

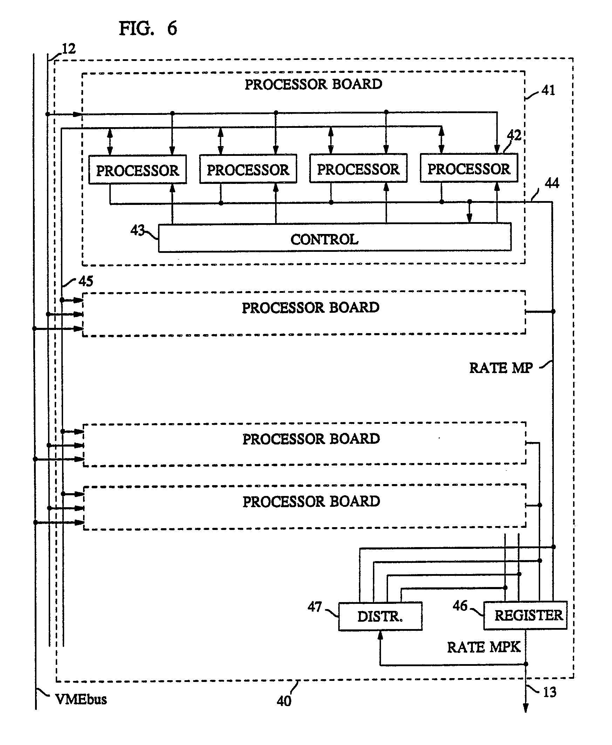

FIG. 6 depicts our arrangement for connecting a plurality of drawing processors 41 that are responsive to signals applied by transformation pipeline 30. By way of example, FIG. 6 depicts two groups of three processor boards 41 where each processor board includes four processors 42 and a control circuit 43. The signals of transformation processor 30 are applied to processors 42 within each board via bus 12. Each board has an output bus 44 onto which processors 42 apply signals under control of circuits 43, and a bi-directional communications bus 45 that interconnects all of the processors.

Control circuits 43 are arranged to time multiplex the output signals of processors 42 on a per scan basis, so that while each processor outputs signals at repetition rate M, the output at each board 41 is also M, but the combined output at bus 44 is at rate MP, where P is the number of processor boards in a group. That is, during each scan line of the video controller a different processor is enabled on board 41 to deliver information at rate M, but the MP clock rate allows information from the remaining boards in the group of P boards to interleave their data appropriately. This results in a multiplexing of P boards by a simple interconnection of the output buses of the P boards in the group. Such connecting and resultant multiplexing is sometimes referred to in the electronic circuits art as "collector ORing".

The desired final output to video controller 50 must combine the signals of all the boards, and the simplest approach is to multiplex the boards in a manner similar to the multiplexing done on each board; that is to operate effectively at rate MPK, where K is the number of boards. Unfortunately, this MPK rate, which is greater than 100 MHz, is too high for present backplane interconnection technology. On the other hand, sending the output of each processor board 41 (at the lower rate M) to video controller board 50 is also not practical because each bus 44 carries 32 bits in parallel, requiring 192 input pins on video controller board 50 only to handle the input buses from the six processor boards 41 shown.

Our solution, as described above, is to form groups of P processor boards and develop a single output bus 44 for the entire group. towards the video control board. controller card (to further reduce the number of pins required), we place a shift register 46 on the wiring backplane in close proximity to video controller 50 shift register, resulting in the rate MPK at a 32 pin input port of controller 50.

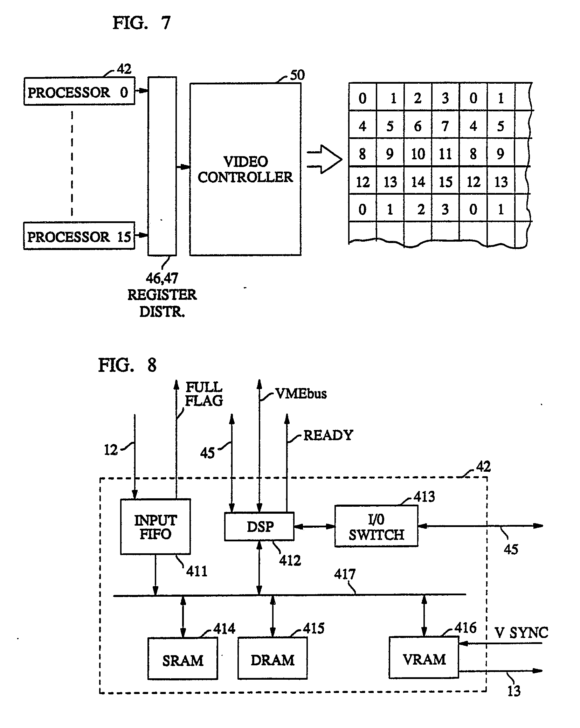

Merely operating drawing processors 42 in parallel is not sufficient to insure that the necessary high rates can be obtained, or that the processors are equally loaded in terms of the computational burden. To equalize the burden, insure an effective multiplexing scheme, and allow for dynamic (i.e., program controlled) rearrangement of the multiplexing arrangement, our graphics machine interleaves the drawing processors as depicted in FIG. 7. In FIG. 7, a portion of the monitor's screen is shown, with a number assigned to each pixel. The numbers represent the specific processor 42 in the FIG. 6 arrangement (which for convenience is also shown in FIG. 7) that is responsible for developing the signal for displaying that pixel. FIG. 7 is shown for an arrangement of sixteen processors 42 (0, 1, 2, ... 15). That number can be different and, in fact, for a given system that number can be changed (i.e., reduced) under program control to any number (as long as that number is not prime). Thus, the interleaving arrangement creates a two-dimensional block of pixels that is serviced by processors 42.

Stated differently, our graphics and image display system is able to utilize whatever number of drawing processors are placed in the system, by virtue of the multiplexing control that is dynamically exercised by control circuit 43. The dynamic control rests with the host which signals control circuits 43 via the VMEbus. Furthermore, any subset of drawing processors can be selected for use, and thereby the robustness of our system is enhanced. Should one drawing processor fail, the host can select a different multiplexing arrangement that utilized the drawing processors that are still operational.

FIG. 8 depicts the block diagram of a processor 42. Like processors 31, at the heart of processors 42 is a digital signal processor, 412, also employing the DSP32, and a bus 417. From the transformation pipeline, input is applied to FIFO memory 411. The VMEbus communicates with DSP 12 directly. DSP 412 operates on data supplied by FIFO 411 and stores the pixel intensity information, via bus 417, in video memory VRAM 416. DSP 412 is assisted in its computations by a dynamic memory 415 and a faster, static memory 414. Both are connected to bus 417. Lastly, DSP 412 is connected to switch 413 which connects the processor to other processors 42 in the system. Memory 416 delivers output to video controller board 50 in a double-buffered mode. That is, memory 416 is considered to comprise two halves. While one half repeatedly sends information to the video controller, the other half is being loaded with updated information. When ready, the roles of the two halves are reversed.

As described above, the parallel display processing system consists of three subsystems: the transformation pipeline, pixel node array, and the video controller. The processing performed within the processors in the subsystems may be any set of conventional image processing algorithms, or proprietary algorithms. Our architecture easily supports both. For proper machine operation, however, the subsystems must be synchronized.

With respect to the synchronization of transformation pipeline 30 with the pixel node array 40, the pixel node array communicates by informing the transformation pipeline of two conditions: 1) any drawing processors input FIFO being full, and 2) all drawing processor's having completed their processing.

The first state is generated by OR'ing all FIFO "full flags" of the drawing processors (one flag per node). This OR'ed signal is checked by the last node in the transformation pipeline (e.g., processor 34 in FIG. 2) before broadcasting information to bus 12. The broadcast is held off until the OR'ed signal is low, indicating that every drawing processor input FIFO 411 has room to accept a broadcast datum. The second state is generated by AND'ing all "processor ready" flags. The occurrence of this state indicates that all drawing processors 42 have finished processing and emptied their input FIFOs. Typically, at this point the drawing processor buffers 414 and 415 are initialized and computations for a new image are started.

With respect to the synchronization of pixel node array 40 with video controller 50, the video controller reads from a frame buffer (416) and refreshes the display CRT at 60 Hz. When the drawing processors are operating in double-buffered mode, they must swap buffers in unison during a vertical retrace interval. Accordingly, the video controller provides a vertical "v sync" flag to all drawing processors 42. When processing a "Swap Buffer" command, the drawing processors wait in a loop polling the status of the "v sync" flag, and swap the buffers when the flag goes high.

With respect to frame buffer 416 scan-line synchronization, the video controller displays 1280 pixels by 1024 scan lines 60 times per second. The pixel information is distributed amongst the drawing processors. In order to synchronize the display during retrace, the video controller broadcasts (over distributor 47 and lines 44 in FIG. 6) a 10-bit scan-line number to each of the processor boards 41. Control circuit 43 detects and decodes this signal and, pursuant to the dynamic multiplexing control information derived from host 10, circuits 43 control the application of output signals of processors 42 onto bus 44.

## Claims

1. A graphics and image display system comprising:
a plurality of drawing processors
a pipeline processor, connected to said plurality of drawing processors, for broadcasting to said drawing processors, and
an output controller for interfacing output signals from said processing elements with a display device.

2. The system of claim 1 wherein said drawing processors form a parallel arrangement of processors, where each of the processors is responsive to said pipeline processor.

3. The system of claim 1 wherein said drawing processors are interconnected to permit communication between said drawing processors.

4. The system of claim 1 wherein said pipeline processor comprises a plurality of transformation processors.

5. The system of claim 3 wherein said plurality of transformation processors are serially connected.

6. The system of claim 1 wherein said output controller includes control means for recieving output signals from a selected subset of said drawing processors.

7. The system of claim 5 wherein said control means alters selection of said subset in response to applied control signals.

8. The system of claim 1, further comprising a host processor for applying data to said pipeline processor.

9. The system of claim 1, further comprising a host processor for applying information to said pipeline processor, to said array of drawing processors, and to said output controller.

10. The system of claim 3 wherein each of said transformation processors comprises:
an internal data bus;
an input FIFO memory, responsive to applied signals, for delivering information to said internal bus;
a digital signal processor connected between said internal bus and a program port;
a memory connected to said internal bus; and
an output FIFO memory interposed between said internal bus and an output port of said transformation processor.

11. The system of claim 1 wherein each of said drawing processors in said array comprises:
an internal data bus;
an input FIFO memory, responsive to applied signals, for delivering information to said internal bus;
a digital signal processor connected between said internal bus and a program port;
a memory connected to said internal bus; and
an video memory interposed between said internal bus and an output port of said processing element.

12. A graphics and image display system comprising:
an array of interconnected drawing processors;
a pipeline processor for broadcasting to said processing elements; and
an output controller for receiving output signals from a selected subset of said processing elements, where said selection is dynamically reconfigurable.

13. In a system comprising K processor circuit boards, with each processor circuit board comprising m processors that develop signals on an output port at a rate M, and further comprising a video controller circuit board requiring the insertion of said signals at rate MPK, all of said circuit boards being connected to an interconnecting backplane that supports transmission of, at most, rate MP, CHARACTERIZED BY:
multiplexing means situated in close proximity of said video controller board, having K input buses operating at rate MP and an output bus operating at rate MPK connected to said video controller;
control means on each of said processors circuit boards for developing m enable signals that apply signals at an output port of each of said processors to an output bus of said processor circuit board;

means for interconnecting groups of P circuit boards by multiplexing the output buses of the circuit boards in each group; and

transmission means on said backplane for connecting the interconnected buses of each group to a different one of said input buses of said multiplexing means.

14. The system of claim 12 wherein said control means is responsive to applied control signals that dictate the application of signals to said output port.

FIG. 1

FIG. 2

# FIG. 3

FROM VMEbus

TO PIXEL NODE
ARRAY

# FIG. 4

FROM VMEbus

TO PIXEL NODE
ARRAY

FIG. 5

FROM PREVIOUS
PIPELINE
PROCESSOR

VMEbus

31

```
┌──────────────────────────────────────────────────┐
│                                                    │
│   ┌───────┐ 310  ┌──────┐ 311  ┌──────┐ 312        │
│   │ INPUT │      │ DSP  │      │ SRAM │            │
│   │ FIFO  │      │      │      │      │            │
│   └───────┘      └──────┘      └──────┘            │
│       │             │             │                │
│   ────┴─────────────┴─────────────┴────────        │
│         314                                        │
│                         ┌───────┐ 313              │
│                         │OUTPUT │                  │
│                         │ FIFO  │                  │
│                         └───────┘                  │
│                             │                      │
└──────────────────────────────────────────────────┘
```

TO NEXT
PIPELINE
PROCESSOR

FIG. 6

VMEbus

FIG. 7

FIG. 8